# EUROPEAN PATENT APPLICATION

(11) **EP 2 088 767 A2**
(43) Date of publication of application: **12.08.2009**
(21) Application number: 08022513.9
(22) Date of filing: 29.12.2008
(51) Int. Cl.: H04N 5/232

(54) **Television camera system**

(30) Priority: 05.02.2008 JP 2008025499
(71) Applicant: Fujinon Corporation, Saitama-shi, Saitama (JP)
(72) Inventor: Moriya, Chikatsu, Saitama-shi Saitama (JP)
(74) Representative: Klunker . Schmitt-Nilson . Hirsch

(57) **Abstract**

A television camera system is provided and includes a television camera body and a lens device. When a power source is turned on, a lens controlling of the lens device recognizes a kind of the camera main body in accordance with a setting state of a camera code switch to decide whether or not an initializing process in the lens device can be carried out as usual. If the initializing process cannot be carried out, the initializing process in the lens device is interrupted for a prescribed time. After the prescribed time elapses, the initializing process in the lens device is started.

## Description

This application is based on and claims priority under 35 U.S.C §119 from Japanese Patent Application No. 2008-025499, filed on February 5, 2008, the entire disclosure of which is herein incorporated by reference.

### BACKGROUND OF THE INVENTION

### 1. Field of the Invention

The present invention relates to a television camera system, and more particularly to a television camera system including a television camera main body (a camera device) and a television lens (a lens device) attached to the camera main body in which an electric power is supplied to a power source of the television lens from the camera main body.

### 2. Description of Related Art

In a television lens (a lens device) used in a television camera for a broadcasting or a business, a focus, a zoom and an iris are ordinarily driven by motors. Under an environment that a commercial power source cannot be used for a power to the lens device for driving the motors, the power is supplied to the lens device through a power circuit in a camera main body from a battery mounted on or connected to the camera main body (for instance, see JP-A-9-304680).

When the power source of the camera main body is turned on under a state that the lens device is attached to the camera main body, the camera main body and the lens device are activated at the same time. Since initializing processes are carried out respectively in the camera main body and the lens device during an activation, a larger quantity of electric power is necessary than a quantity of electric power necessary during an ordinary use except during an activation. Accordingly, when the camera main body and the lens device are activated at the same time, the camera main body side decides that the electric power cannot be supplied to the lens device (the deficiency of the electric power), so that a television camera system may not be occasionally operated normally. In order to avoid such a failure, a method may be considered in which the lens device is not attached to the camera main body and only the camera main body is activated, and then, the lens device is attached to the camera main body to activate the lens device. However, a troublesome work is necessary and a large burden is required for a user to carry out such an activating method every time the power source is turned on.

### SUMMARY OF THE INVENTION

An object of an illustrative, non-limiting embodiment of the present invention is to provide a television camera system, which can prevent failure due to the deficiency of electric power when a power source is turned on under a state that a lens device is attached to a camera main body.

According to a first aspect of the invention, there is provided a television camera system including: a television camera main body; and a lens device detachably attached to the television camera main body and operating by an electric power supplied from the television camera main body. A supply of the electric power to the television camera main body and the lens device is started by a power-on operation. When an initializing process in the lens device is carried out after the power is turned on, the initializing process in the lens device is temporarily stopped during a prescribed time in which an initializing process in the camera main body is carried out.

According to the first aspect of the invention, when the power source of the television camera main body and the lens device is turned on, since the initializing process in the lens device is carried out at a different timing from that of the initializing process of the television camera main body, failure (or, trouble or inconvenience) due to the deficiency of the electric power at the time of turning on the power can be prevented.

According to a second aspect of the invention, there is provided a television camera system including: a television camera main body and a lens device detachably attached to the television camera main body and operating by an electric power supplied from the television camera main body. A supply of the electric power to the television camera main body and the lens device is started by a power-on operation. The television camera system further includes: an operating unit that allows an operator to input an instruction for stopping an initializing process in the lens device after the power-on operation and is characterized in that while the instruction for stopping the initializing process in the lens device is inputted by the operating unit, the initializing process in the lens device is temporarily stopped.

According to the second aspect of the invention, a user carries out a prescribed operation as required during the power-on operation of the television camera main body and the lens device, so that the initializing process in the lens device can be stopped and carried out at a different timing from that of the initializing process of the television camera main body. Accordingly, failure due to the deficiency of the electric power can be prevented during the power-on operation.

According to a third aspect of the invention, there is provided a television camera including: a television camera main body; and a lens device detachably attached to the television camera main body and operating by an electric power supplied from the television camera main body. A supply of the electric power to the television camera main body and the lens device is started by a power-on operation. The television camera system further includes: an operating unit that allows an operator to input an instruction for starting an initializing process in the lens device after the power-on operation, and is characterized in that when the instruction for starting the initializing process in the lens device is inputted by the operating unit, the initializing process in the lens device is started.

According to the third aspect of the invention, since during the power-on operation of the television camera main body and the lens device, the user can adjust a timing for carrying out the initializing process in the lens device, the user can allow the initializing process in the lens device to be carried out at a different timing from that of the initializing process of the television camera main body. Thus, failure due to the deficiency of the electric power can be prevented during the power-on operation.

A television camera system in any one of the first, second, and third aspects further includes: an obtaining unit that obtains information about whether or not the initializing process in the lens device can be carried out as usual (i.e., without failure in the television camera system) and is characterized in that when it is decided that the initializing process in the lens device can be carried out as usual in accordance with the information obtained by the obtaining unit, the initializing process in the lens device is unconditionally started after the power-on operation.

In the television camera system, even when the initializing processes of the television camera main body and the lens device are carried out at the same time, failure does not arise depending on kinds of the television camera main bodies. Accordingly, in such a case, the initializing process in the lens device is immediately carried out after the power-on operation.

In the television camera system, when the electric power is supplied to the lens device from other part than the television camera main body, the initializing process in the lens device may be unconditionally started after the power-on operation.

In the television camera system, when the electric power is supplied to the lens device other part than the television camera main body, even if the initializing processes of the television camera main body and the lens device are carried out at the same time, failure does not arise. Therefore, in such a case, the initializing process in the lens device is immediately carried out after the power-on operation.

### BRIEF DESCRIPTION OF THE DRAWINGS

The features of the invention will appear more fully upon consideration of the exemplary embodiment of the invention, which are schematically set forth in the drawings, in which:
Fig. 1 is a block diagram showing a television camera system according to an exemplary embodiment of the invention;
Fig. 2 is a flowchart showing a first exemplary embodiment of a process of a lens controlling CPU at the time of turning on a power source;
Fig. 3 is a flowchart showing a second exemplary embodiment of a process of a lens controlling CPU at the time of turning on a power source; and
Fig. 4 is a flowchart showing a third exemplary embodiment of a process of a lens controlling CPU at the time of turning on a power source.

### DETAILED DESCRIPTION OF THE EXEMPLARY EMBODIMENTS

According to a television camera system of the present invention, when the power source is turned on under a state that the lens device is attached to the camera main body, failure due to the deficiency of the electric power can be prevented.

Now, referring to the attached drawing, exemplary embodiments in a television camera system according to the present invention will be described in detail.

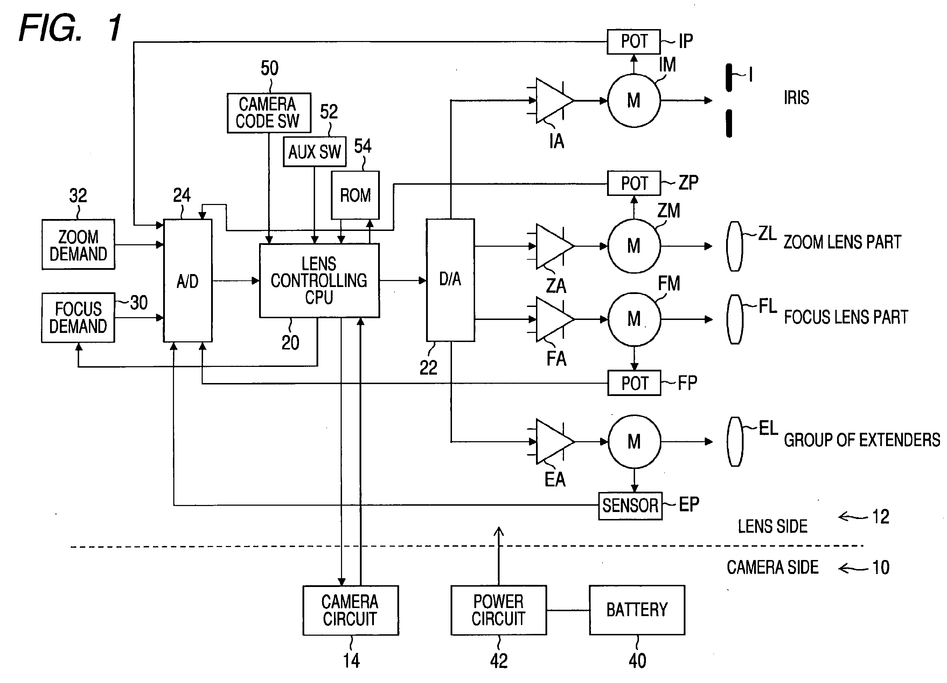

Fig. 1 is a block diagram showing the structure of a television camera system for broadcasting or a business. The television camera system shown in Fig. 1 mainly includes a camera main body 10 and a lens device 12. The lens device 12 is detachably attached to the camera main body 10.

On the camera main body 10, a camera circuit 14 is mounted that includes an image pick-up element (not shown in the drawing) for converting an image of an object to be shot which is formed by an optical system of the lens device 12 into an electric signal, a signal processing circuit (not shown in the drawing) for applying a prescribed process to the electric signal of the image of the object to be shot obtained by the image pick-up element to convert the electric signal to a video signal of a prescribed form or a CPU for generally controlling an entire part.

The lens device 12 includes an optical system for forming the image of the object to be shot and a control system for controlling the optical system. The optical system includes, as components, for instance, a group of movable focus lenses FL arranged in a lens barrel for adjusting a focus (for adjusting a focal point) as shown in Fig. 1, a group of movable zoom lenses ZL for adjusting a zoom (for adjusting a focal distance), a movable iris I for adjusting a brightness and a group of movable extenders EL for switching a shooting magnification to 1 magnification and prescribed magnifications. Further, the optical system includes a group of fixed lenses that are not shown in the drawing.

On the other hand, the control system includes components for driving and controlling the group of focus lenses FL, the group of zoom lenses ZL, the iris I and the group of extenders EL of the optical system respectively by motors FM, ZM, IM, and EM connected thereto. Though a detail is omitted, the control system includes a lens controlling CPU 20 for generally controlling the entire part of the lens device 12, a D/A converter 22 for converting control signals of positions or moving speed of the group of focus lenses FL, the group of zoom lenses ZL, the iris I and the group of extenders EL respectively outputted from the lens controlling CPU 20 to analog signals from digital signals, amplifiers FA, ZA, IA and EA for driving the motors respectively in accordance with the control signals converted into the analog signals by the D/A converter 22, position sensors FP, ZP, IP and EP for detecting current positions respectively of the group of focus lenses FL, the group of zoom lenses ZL, the iris I and the group of extenders EL and an A/D converter 24 for converting output signals from the position sensors FP, ZP, IP and EP respectively into digital signals from analog signals. The group of focus lenses FL, the group of zoom lenses ZL, the iris I and the group of extenders EL are driven and controlled at the positions or the moving speeds set as target positions or target speed in the lens controlling CPU 20 by the components of the control system.

Further, to the lens device 12, a controller such as a focus demand 30 or a zoom demand 32 is attached or connected by a cable. In the focus demand 30, a manual focus operating member for operating a focus is provided. A focus command signal showing the target position or the target moving speed of a focus (the group of focus lenses FL) is outputted from the focus demand 30 in accordance with an operation of the focus operating member. The command signal is converted into the digital signal from the analog signal by the A/D converter 24 and supplied to the lens controlling CPU 20.

In the zoom demand 32, a manual zoom operating member for operating a zoom is provided. A zoom command signal showing the target position or the target moving speed of the zoom (the group of zoom lenses ZL) is outputted from the zoom demand 32 in accordance with an operation of the zoom operating member. The command signal is converted into the digital signal from the analog signal by the A/D converter 24 and supplied to the lens controlling CPU 20.

In the lens controlling CPU 20, the target positions or the target speeds of the group of focus lens FL and the group of zoom lenses ZL are set in accordance with the command signals supplied from the focus demand 30 or the zoom demand 32 to control the group of focus lenses FL and the group of zoom lenses ZL so as to have the target positions or the target moving speeds. The iris I is controlled in accordance with an iris command signal supplied from the camera main body 10. The group of extenders EL is controlled in accordance with a command signal supplied by an operation of a prescribed operating member that is not shown in the drawing.

The camera main body 10 and the lens device 12 are connected directly by connectors provided in both devices or through a cable and electrically connected to each other. Thus, various kinds of information can be transmitted and received between the camera circuit 14 of the camera main body 10 and the lens controlling CPU 20 of the lens device 12.

Further, on the camera main body 10, a battery 40 and a power circuit 42 are mounted. An electric power of the battery 40 is transmitted to the lens device 12 from the power circuit 42 of the camera main body 10 so that the electric power necessary for operating the lens dev ice 12 is supplied. A power switch (a switch for turning on the power source of the camera main body 10 and the lens device 12) for activating the television camera system is provided in the camera main body 10. When the power switch 10 is switched from a turned off state to a turned on state, the electric power of the battery 40 is supplied to circuits (the camera circuit 14 or the like) respectively in the camera main body 10 and to the lens dev ice 12 through the power circuit 42. The present invention is not limited to a case that the battery 40 is mounted on the camera main body 10 to supply the electric power to the camera main body 10 or the lens device 12 from the battery 40. The present invention may include a case that an electric power is supplied to the camera main body 10 or the lens device 12 from, for instance, an external device called a camera control unit. In the present invention, any form of an electric power supply source may be applied to eliminate a below-described inconvenience.

When the power switch is turned on from the turned off state (when the power source is turned on), initializing processes are carried out in the camera main body 10 and the lens device 12. However, when these operations are carried out at the same time, the electric power of the power circuit 42 exceeds a maximum output electric power so that the initializing process is not normally carried out. Thus, failure may possibly arise that the system does not normally operate.

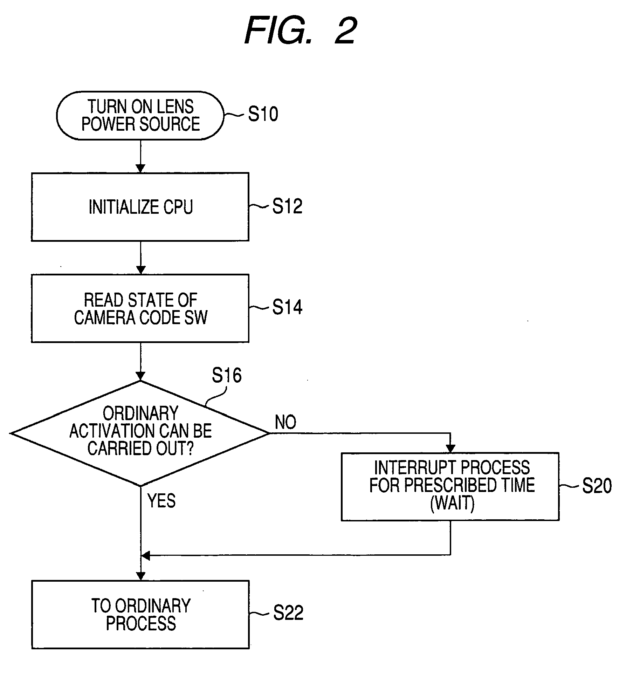

Thus, when the initializing process is carried out in the lens device 12, a below-described process is carried out in the lens controlling CPU 20. Fig. 2 is a flowchart showing a first embodiment of the process.

When the power switch of the camera main body 10 is turned on to turn on the power source of the lens device 12 (the supply of the electric power is started) (step S10), the initializing process of the lens controlling CPU 20 itself is initially carried out (step S 12).

Then, a setting state of a camera code switch 50 is read (step S14). The camera code switch 50 is a switch for selecting the kind of the camera main body 10. The lens controlling CPU 20 recognizes the kind of the camera main body 10 to which the lens device 12 is attached in accordance with the state of the camera code switch 50 to decide whether or not the camera main body can be ordinarily activated on the basis of data previously recorded in a ROM 26 shown in Fig. 1 (step S16).

When the lens controlling CPU 20 makes a decision of YES in the deciding process in the step S16, the lens controlling CPU 20 immediately carried out an ordinary initializing process (step S 18). The initializing process in the step S 18 includes a process for moving the groups of the focus lenses FL or the group of the zoom lenses ZL to a prescribed initial position that requires a larger electric power than that of the initializing process of the lens controlling CPU 20 in the step S10. The initializing process in the camera main body 10 is immediately started after the power switch is turned on. When a prescribed time elapses, the initializing process is finished.

On the other hand, in the deciding process in the step S16, when the lens controlling CPU 20 makes a decision of NO, the lens controlling CPU 20 temporarily interrupts the initializing process in the lens device 12 for a prescribed time to have a stand-by state (step S20). A stand-by time during which the stand-by state is formed is desirably set to a time during which the stand-by state is finished after the initializing process in the camera main body 10 is finished. For instance, about 5 seconds may be a proper stand-by time for many kinds of camera main bodies 10. The stand-by time may be suitably changed to a proper time depending on the kinds of the camera main bodies 10.

When the stand-by time elapses in the step S20, the lens controlling CPU 20 carries out the ordinary initializing process of the step S 18.

According to the above-described first embodiment, when there is a fear that when the initializing process in the lens device 12 and the initializing process in the camera main body 10 are carried out at the same time during a power-on operation, the electric power is insufficient, while the initializing process is carried out in the camera main body 10, the initializing process in the lens device 12 is automatically interrupted.

In the above-described first embodiment, the kind of the camera main body 10 is recognized by the camera code switch 50 (step S14) to decide whether or not the ordinary activating process can be carried out (step S16) and only when the ordinary activating process cannot be carried out, the initializing process in the lens device 12 is interrupted for a prescribed time. However, the processes in the step S14 and the step S16 may not be carried out and the initializing process of the lens device 12 may be unconditionally interrupted for a prescribed time (step S20).

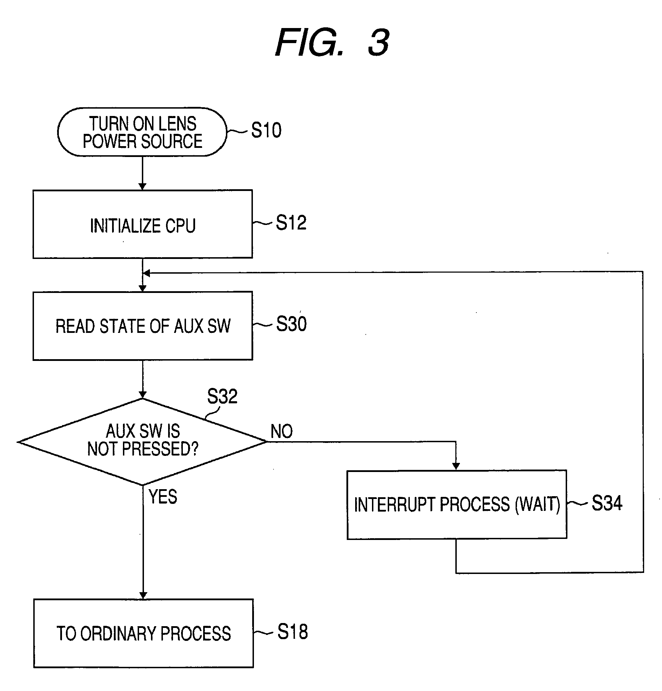

Fig. 3 is a flowchart showing a second embodiment of a process of the lens controlling CPU 20 at the time of turning on the power source. The same processes as or similar processes to those of the flowchart shown in Fig. 2 are designated by the same step numbers as those of Fig. 2. When the power switch of the camera main body 10 is turned on to turn on the power source of the lens device 12 (the supply of the electric power is started) (step S10), the lens controlling CPU 20 is initially initialized (step S 12).

Subsequently, the state of an AUX switch 52 shown in Fig. 1 is read (step S30). The AUX switch 52 is a switch turned on when it is pressed and turned off when it is not pressed. Then, the lens controlling CPU 20 decides whether or not the AUX switch 52 is turned off (not pressed) (step S32).

In the deciding process of the step S32, when the lens controlling CPU 20 makes a decision of YES, the lens controlling CPU 20 immediately carries out an ordinary initializing process (step S 18)

On the other hand, in the deciding process of the step S32, when the lens controlling CPU makes a decision of NO, the lens controlling CPU interrupts the initializing process in the lens device 12 to have a stand-by state (step S34) as in the first embodiment. Then, the lens controlling CPU 20 returns to the step S30. In the deciding process in the step S32, while the lens controlling CPU 20 makes a decision of NO, that is, while the AUX switch 52 is pressed, the processes of the step S30, the step S32 and the step S34 are repeatedly carried out. When the AUX switch 52 is not pressed, in the deciding process of the step S32, the lens controlling CPU 20 makes a decision of YES to start the ordinary initializing process (step S 18).

According to the above-described second embodiment, when there is a fear that when the initializing process in the lens device 12 and the initializing process in the camera main body 10 are carried out at the same time during a power-on operation, the electric power is insufficient, while the initializing process is carried out in the camera main body 10, the initializing process in the lens device 12 can be interrupted in accordance with a decision of a user.

In the second embodiment, when the camera main body 10 can be ordinarily activated by the processes of the step S 14 and the step S 16 of the first embodiment, even if the AUX switch 52 is pressed, the initializing process of the lens device 12 may be carried out.

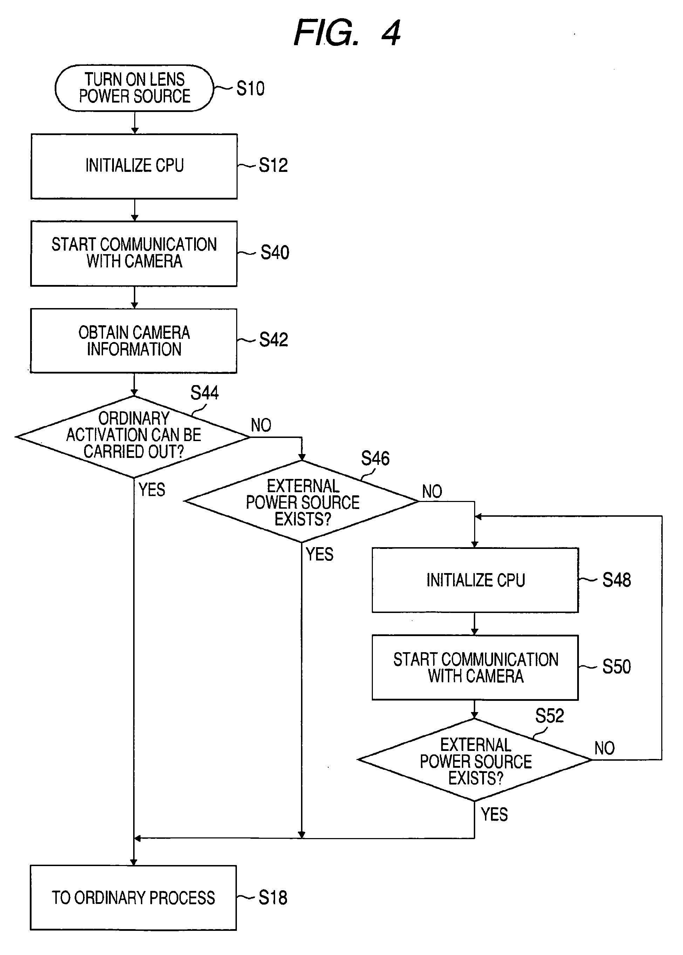

Fig. 4 is a flowchart showing a third embodiment of a process of the lens controlling CPU 20 at the time of turning on the power source. The same processes as or similar processes to those of the flowchart shown in Fig. 3 are designated by the same step numbers as those of Fig. 2 or Fig. 3. When the power switch of the camera main body 10 is turned on to turn on the power source of the lens device 12 (the supply of the electric power is started) (step S10), the lens controlling CPU 20 is initially initialized (step S12).

Subsequently, the lens controlling CPU 20 starts a communication with the camera main body 10 (the camera circuit 14) (step S40) to obtain camera information. As the camera information, for instance, information of the kinds of the camera main body 10 is obtained similarly to the information obtained by the camera code switch 50 in the first embodiment (step S42). As the information of the kinds of the camera main body 10, information of model names or camera makers or the like may be exemplified.

The lens controlling CPU 20 decides whether or not the camera main body 10 can be ordinarily activated on the basis of the information obtained from the camera main body 10 (step S44).

In the deciding process in the step S44, when the lens controlling CPU makes a decision of YES, the lens controlling CPU 20 immediately carries out an ordinary initializing process (step S18).

On the other hand, in the deciding process in the step S44, when the lens controlling CPU 20 makes a decision of NO, then, the lens controlling CPU 20 decides whether or not an electric power is supplied to the lens device 12 not from the camera main body 10, but from an external power source (step S46). The lens device 12 has a connector to which the external power source such as a commercial power source is connected so that the electric power is supplied to the lens device 12 from the external power source through the connector.

In the step S46, when the lens controlling CPU 20 makes a decision of YES, since even when the initializing process in the lens device 12 is carried out simultaneously with the initializing process in the camera main body 10, failure due to the deficiency of the electric power does not arise, the lens controlling CPU 20 carries out an ordinary initializing process (step S 18).

In the step S46, when the lens controlling CPU 20 makes a decision of NO, the lens controlling CPU 20 interrupts the initializing process in the lens device 12 to have a stand-by state (step S48). Subsequently, the lens controlling CPU 20 reads the state of the AUX switch 52 (step S50). Then, the lens controlling CPU 20 decides whether or not the AUX switch 52 is pressed (turned on) (step S52). In the step S52, when the lens controlling CPU 20 makes a decision of NO, the lens controlling CPU 20 returns to the step S46 to maintain the stand-by state. On the other hand, when the lens controlling CPU 20 makes a decision of YES, the lens controlling CPU 20 carries out the ordinary initializing process in the lens device 12 (step S18).

According to the above-described third embodiment, when there is a fear that the initializing process in the lens device 12 and the initializing process in the camera main body 10 are carried out at the same time during a power-on operation so that the electric power is insufficient, the initializing process in the lens device 12 is interrupted and a user decides that the fear of the deficiency of the electric power disappears (the initializing process in the camera main body 10 is finished), and accordingly, the initializing process in the lens device 12 can be started.

The decision as to whether or not the ordinary activation of the camera main body 10 can be carried out in the step S44 may be made in accordance with the camera code switch 50 similarly to the first embodiment. Further, in the first embodiment, the decision as to whether or not the camera main body 10 can be ordinarily activated (the step S16 in Fig. 2) may be made on the basis of the information obtained from the camera main body 10 as in the third embodiment.

In the step S46, when it is decided that that there is no external power source, the initializing process of the lens device 12 may be interrupted for a prescribed time without carrying out a special operation by the user as in the first embodiment. Further, the initializing process in the lens device 12 may be stopped only while the user instructs an interruption by the AUX switch 52 as in the second embodiment.

## Claims

1. A television camera system comprising:
a television camera main body; and
a lens device detachably attached to the television camera main body and operating by an electric power supplied from the television camera main body, a supply of the electric power to the television camera main body and the lens device being started by a power-on operation, wherein when an initializing process in the lens device is carried out after the power-on operation, the initializing process in the lens device is temporarily stopped during a time in which an initializing process in the camera main body is carried out in the camera main body.

2. A television camera system comprising:
a television camera main body; and
a lens device detachably attached to the television camera main body and operating by an electric power supplied from the television camera main body, a supply of the electric power to the television camera main body and the lens device being started by a power-on operation, the television camera system further comprising:
an operating unit that allows an operator to input an instruction for stopping an initializing process in the lens device after the power-on operation, wherein the initializing process in the lens device is temporarily stopped when an instruction for stopping the initializing process in the lens device is inputted by the operating unit.

3. A television camera system comprising:
a television camera main body; and
a lens device detachably attached to the television camera main body and operating by an electric power supplied from the television camera main body, a supply of the electric power to the television camera main body and the lens device being started by a power-on operation, the television camera system further comprising:
an operating unit that allows an operator to input an instruction for starting an initializing process in the lens device after the power-on operation, wherein when an instruction for starting the initializing process in the lend device is inputted by the operating unit, the initializing process in the lens device is started.

4. The television camera system according to claim 1, further comprising:
an obtaining unit that obtains information on whether or not the initializing process in the lens device can be carried out without causing failure in the television camera system, wherein when the information indicates that the initializing process in the lens device can be carried out without causing failure in the television camera system, the initializing process in the lens device is unconditionally started after the power-on operation.

5. The television camera system according to claim 1, wherein when the electric power is supplied to the lens device from other part than the television camera main body, the initializing process in the lens device is unconditionally started after the power-on operation.

6. The television camera system according to claim 2, further comprising:
an obtaining unit that obtains information on whether or not the initializing process in the lens device can be carried out without causing a trouble in the television camera system, wherein when the information indicates that the initializing process in the lens device can be carried out without causing a trouble in the television camera system, the initializing process in the lens device is unconditionally started after the power-on operation.

7. The television camera system according to claim 2, wherein when the electric power is supplied to the lens device from other part than the television camera main body, the initializing process in the lens device is unconditionally started after the power-on operation.

8. The television camera system according to claim 3, further comprising:
an obtaining unit that obtains information on whether or not the initializing process in the lens device can be carried out without causing a trouble in the television camera system, wherein when the information indicates that the initializing process in the lens device can be carried out without causing a trouble in the television camera system, the initializing process in the lens device is unconditionally started after the power-on operation.

9. The television camera system according to claim 3, wherein when the electric power is supplied to the lens device from other part than the television camera main body, the initializing process in the lens device is unconditionally started after the power-on operation.
